(19) Europäisches Patentamt
European Patent Office
Office européen des brevets

(11) EP 2 128 961 A1

(12) EUROPÄISCHE PATENTANMELDUNG

(43) Veröffentlichungstag:
02.12.2009 Patentblatt 2009/49

(51) Int Cl.:
H02K 1/16 $^{(2006.01)}$    H02K 3/02 $^{(2006.01)}$

(21) Anmeldenummer: 08009851.0

(22) Anmeldetag: 29.05.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(71) Anmelder: SIEMENS AKTIENGESELLSCHAFT
80333 München (DE)

(72) Erfinder:
• Hassel, Jörg
91058 Erlangen (DE)

• Potoradi, Detlef, Dr.
97616 Bad Neustadt/Saale
Mühlbach (DE)
• Vollmer, Rolf
36129 Gersfeld (DE)

Bemerkungen:
Geänderte Patentansprüche gemäss Regel 137(2)
EPÜ.

(54) **Stator für eine elektrische Maschine**

(57)    Bei einem Stator (10') für eine elektrische Maschine, bei der mit Permanentmagneten erregte Rotoren eingesetzt werden sollen, werden die Nuten (14'), in denen Wicklungen angeordnet sind, wesentlich weniger tief und schmäler als im Stand der Technik ausgebildet. Dies ist in vorteilhafter Ausführungsform dadurch ermöglicht, dass die Spulen aus Material gebildet sind, das Kohlenstoffnanoröhren umfasst, z.B. aus einem Kompositmaterial aus Kohlenstoffnanoröhren und Kupfer.

FIG 2

EP 2 128 961 A1

## Beschreibung

Die Erfindung betrifft einen Stator für eine elektrische Maschine nach dem Oberbegriff von Patentanspruch 1.

Der Stator weist einen Grundkörper auf, der üblicherweise als Blechpaket ausgebildet ist. Der Grundkörper weist eine Außenkontur mit kreisförmigem Querschnitt auf, wobei der kreisförmige Querschnitt über eine Achse des Grundkörpers in der Regel unverändert bleibt, so dass eine zylindrische Außenkontur gebildet ist. Ferner weist der Grundkörper eine Ausnehmung mit kreisförmigem Querschnitt auf, wobei der kreisförmige Querschnitt üblicherweise über die Längsachse des Grundkörpers unveränderlich ist, so dass die Ausnehmung zylindrisch ist. In dem den Grundkörper bildenden Blechpaket sind Nuten ausgebildet, und zwar weisen diese Nuten zu der Ausnehmung hin, und sie dienen der Aufnahme von Spulen. Sie sind durch Zähne mit der auf halber Höhe der Zähne (vom Nutgrund bis zur Ausnehmung) zu messenden Zahnbreite *bz* getrennt. Der Nutgrund ist von der kreisförmigen Außenkontur um die sogenannte Jochhöhe *hj* beabstandet. Typischerweise bildet eine Mehrzahl von Spulen einen Pol. Dies bedeutet, dass die Spulen geeignet miteinander verschaltet sind und zu den Spulen in einer Nut eine Stromrichtung festgelegt ist derart, dass bei Beschickung der Spulen mit Strom ein in eine vorbestimmte Richtung weisendes Magnetfeld erzeugt wird. Diese Gruppe von Spulen in einander benachbarten Nuten wird dann durch Gruppen von Spulen in einander benachbarten Nuten entlang des Innenkreises des Grundkörpers, der zur Ausnehmung weist, abgelöst, die einem weiteren Pol zugeordnet sind. Bei Beschickung dieser weiteren Spulen mit Strom wird ein Magnetfeld in genau umgekehrter Richtung erzeugt, so wird also abwechselnd ein magnetischer Nordpol und ein magnetischer Südpol bereitgestellt. Die Gesamtzahl der Pole ist somit ein Vielfaches von 2, die Polzahl beträgt also 2 · *p* mit *p* = 1,2.... Jedem Pol kann eine Polteilung $\tau_p$ zugeordnet werden. Diese Polteilung ist im Wesentlichen die Länge des Bogens von der ersten zu der letzten Nut derjenigen Nuten, in denen sich Spulen befinden, die derselben Gruppe zugeordnet sind. Die Gesamtzahl der Polteilungen ergibt den gesamten Kreisbogen, so dass sich die Polteilung $\tau_p$ ergibt zu

$$\tau_p = \frac{1}{2 \cdot p} \cdot Kreisbogenl\ddot{a}nge = \frac{1}{2 \cdot p} \cdot 2\ \pi \cdot r \quad , \text{wobei } r \text{ der Radius der}$$

Ausnehmung ist.

Ein Stator der beschriebenen Art wird insbesondere in Verbindung mit mit Permanentmagneten erregten Rotoren eingesetzt. Es ist ständige Aufgabe des Entwicklers, die Leistungszahlen der elektrischen Maschine zu erhöhen. Eine wichtige zu beachtende Größe ergibt sich aus der Drehzahlbegrenzung: Die Drehzahl wird durch einen in der elektrischen Maschine verwendeten Umrichter festgelegt. Die Drehzahlbegrenzung ist durch eine Kennlinie vorgegeben, welche das maximal mögliche Drehmoment in Abhängigkeit von der Umrichterausgangsspannung, mit der die Ständerwicklung (also die Spulen) gespeist werden, beaufschlagt wird, wiedergibt. Eine weitere Größe ist der Leistungsfaktor, der wiedergibt, welcher Anteil des Stroms für eine Wirkleistung sorgt, bezogen auf die von dem Strom hervorgerufene Scheinleistung. Der Leistungsfaktor ist abhängig vom Kosinus des Phasenwinkels zwischen Strom und eingeprägter Spannung. Eine weitere beim Bau einer Maschine zu beachtende Größe sind die thermisch verkraftbaren Dauerdrehmomente. Es handelt sich hierbei um diejenigen Drehmomente, mit denen die elektrische Maschine dauerhaft betrieben werden kann, ohne dass die Erwärmung eine vorbestimmte Grenze übersteigt, sie sind also durch eine thermische Belastungsgrenze vorgegeben. Diese Belastungsgrenze ist wiederum durch die Wärmeverluste des Stroms bestimmt.

Es ist nun Aufgabe der Erfindung, eine Lösung aufzuzeigen, wie für eine elektrische Maschine die Drehzahlbegrenzung erhöht werden kann, also die oben beschriebene Grenzkennlinie nach oben verschoben werden kann und gleichzeitig der Leitungsfaktor erhöht werden kann. Bevorzugt soll dies mit möglichst hohen thermisch verkraftbaren Dauerdrehmomenten einhergehen.

Die Aufgabe wird dadurch gelöst, dass gilt: $0,7\ \tau_p < \Sigma bz$ und $hj > 0,5\ \tau_p$, wobei $\Sigma bz$ die Summe der Zahnbreiten zu einem Pol ist.

Die Abmessungen der Nuten unterscheiden sich also von den Abmessungen der Nuten bei Statoren des Standes der Technik, wo typischerweise gilt:

$$0,125\ \tau_p < \sum bz < 0,65\ \tau_p \quad \text{und} \quad 0,05\ \tau_p < hj < 0,5\ \tau_p.$$

Mit anderen Worten sind die Nuten also schmäler und weniger tief ausgebildet als bei Statoren des Standes der Technik.

Die Erfindung beruht auf der Erkenntnis, dass die Grenzleistung und die Drehzahlbegrenzung durch die Höhe der Induktivität festgelegt wird, und dass bei schmäleren und weniger tiefen Nuten wie erfindungsgemäß ausgeführt eine kleinere Induktivität gegeben ist und damit die Aufgabe erfüllt wird.

Um zu vermeiden, dass die thermisch verkraftbaren Dauerdrehmomente stark erniedrigt werden, sollen die Wicklungen möglichst aus einem gut leitenden Material gebildet sein. Bevorzugt sind die Wicklungen aus Material gebildet, das Kohlenstoffennanoröhren umfasst. Kohlenstoffnanoröhren sind gemäß Wikipedia, der freien Enzyklopädie in der Fassung vom 19. Februar 2008 mikroskopisch kleine röhrenförmige Gebilde (molekulare Nanaröhren) aus Kunststoff. Sie sind auch unter dem Namen CNT (carbon nanotubes) bekannt.

Kohlenstoffnanoröhren sind insbesondere elektrisch leitfähig. Durch Verwendung eines Materials, das Kohlenstoffnanoröhren umfasst, können die Spulen wesentlich leitfähiger sein, als wenn sie aus Kupfer gebildet sind. Dadurch sind die Ohmschen Verluste geringer, und es sind höhere Dauerdrehmomente thermisch verkraftbar.

Das Spulenmaterial kann vollständig aus Kohlenstoffnanoröhren gebildet sein. Bekannt sind aber auch Kompositmaterialien aus Kohlenstoffnanoröhren und einem weiteren Material, wobei vorzugsweise ein elektrischer Leiter als weiteres Material zu wählen wäre, insbesondere also Metall. Vorliegend kann an die guten elektrische Leitfähigkeiten von Kupfer angeknüpft werden. Beispielsweise ist ein solches Kompositmaterial in der EP 1275118 B1 beschrieben: Es werden Nanostrukturen in eine Matrix eingebettet, und diese Nanostrukturen können einen sehr hohen Volumenprozentanteil aufweisen. Das Material ist als elektrisch leitfähiges Kabel einsetzbar.

Nachfolgend wird eine bevorzugte Ausführungsform der Erfindung unter Bezug auf die Zeichnung beschrieben, wobei

FIG 1     einen Ausschnitt aus einem Stator gemäß dem Stand der Technik veranschaulicht und
FIG 2     einen Ausschnitt aus einem erfindungsgemäßen Stator im Schnitt veranschaulicht.

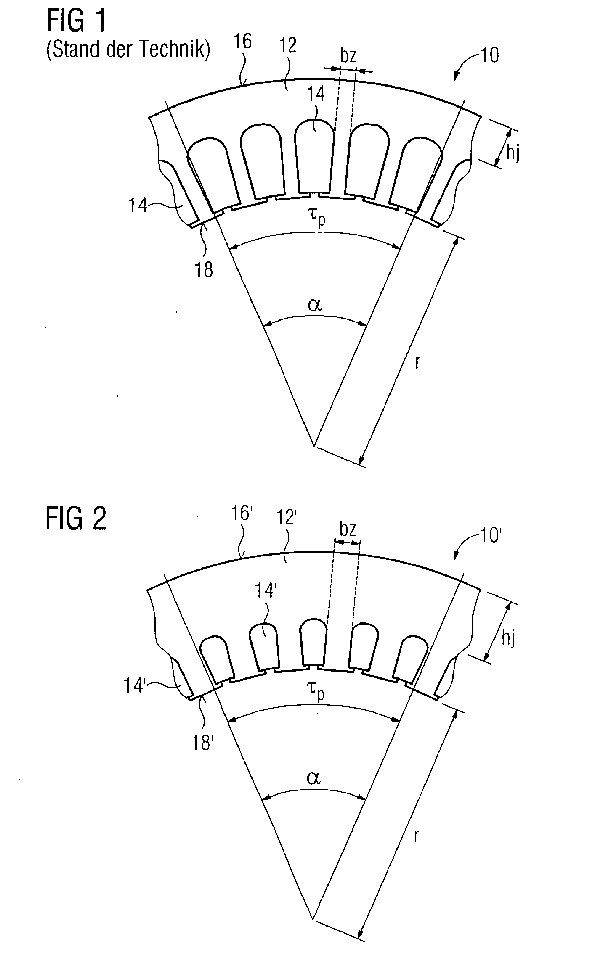

Ein Stator 10 gemäß dem Stand der Technik umfasst einen Grundkörper 12, in dem eine Vielzahl von Nuten 14 ausgebildet sind. Der Grundkörper 12 hat eine kreisförmige Außenkontur 16 und eine kreisförmige Innenkontur 18. In den Nuten 14 sind Spulen (Wicklungen) angeordnet. Jeweils eine Gruppe von solchen Spulen gehört zu einem Pol. FIG 1 zeigt die zu genau einem solchen Pol gehörigen Nuten 14. Die in FIG 1 gezeigte Bogenlänge $\tau_p$ ist die sogenannte Polteilung, die sich aus dem von dem Pol eingenommenen Winkel $\alpha$ durch $\tau_p = \alpha \cdot r$ ergibt, wobei $r$ der Innenradius des Grundkörpers 12 ist. $\tau_p$ ist gleichzeitig (1/2p)-tel des gesamten Kreisbogens des Innenkreises 18 des Grundkörpers 12, wobei 2 p die Zahl der Pole ist. Zwei benachbarten Nuten 14 sind jeweils durch einen Zahn mit der Zahnbreite $bz$ getrennt, wobei diese Zahnbreite auf halber Höhe zwischen Nutgrund und Innenkreis 18 gemessen wird. Der Nutgrund der Nuten 14 ist um die sogenannte Jochhöhe $hj$ vom Außenkreis 16 beabstandet.

Im Stand der Technik gilt, wie auch aus der Zeichnung zu entnehmen ist:

$0{,}125 \cdot \tau_p < \Sigma bz < 0{,}65 \, \tau_p$' wobei $\Sigma bz$ die Summe der Zahnbreiten aller Zähne ist, die zu einem Pol gehören.

Ferner gilt: $0{,}05 \cdot \tau_p < hj < 0{,}5 \, \tau_p$.

FIG 2 zeigt nun einen Stator 10' gemäß der Erfindung. Bei diesem Stator 10' befinden sich in den Nuten 14' Wicklungen aus einem Kompositmaterial aus Kupfer und Kohlenstoffnanoröhren. Das Kompositmaterial kann gebildet sein, wie es in der EP 1275118 B1 beschrieben ist. Es sind auch andere Kompositmaterialien und zugehörige Herstellungsverfahren bekannt, welche vorliegend eingesetzt werden können.

Wegen der höheren Stromleitungsfähigkeit dieses Kompositmaterials gegenüber bei dem Stator 10 gemäß dem Stand der Technik typischerweise verwendeten Kupferspulen können die Nuten 14' schmäler sein als die Nuten 14, und sie müssen weniger tief sein. Dies bedeutet, dass umgekehrt die Zahnbreite $bz$ und die Jochhöhe $hj$ höher sind. Es gilt: $0{,}7 \, \tau_p < \Sigma bz$, wobei bevorzugt $0{,}75 \, \tau_p < \Sigma bz$ gilt und sogar Ausführungsformen möglich sind, bei denen $0{,}8 \, \tau_p < \Sigma bz$. Gleichzeitig gilt $hj > 0{,}5 \, \tau_p$, wobei bevorzugt sogar $hj > 0{,}6 \, \tau_p$ gilt und Ausführungsformen möglich sind, bei denen $hj > 0{,}75 \, \tau_p$ oder gar $hj > 0{,}8 \, \tau_p$ ist.

Der Stator 10' aus FIG 2 hat einen höheren Leistungsfaktor, und die Drehzahlen sind bei ansonsten gleichen Bedingungen nicht so stark nach oben begrenzt wie bei dem Stator 10 gemäß dem Stand der Technik. Gleichzeitig sind die thermisch verkraftbaren Dauerdrehmomente nicht geringer als bei dem Stator 10 gemäß dem Stand der Technik, sie können sogar höher als bei diesem sein.

**Patentansprüche**

1.  Stator (10') für eine elektrische Maschine mit einem Grundkörper (12'), der eine Ausnehmung mit kreisförmigem Querschnitt aufweist, wobei in dem Grundkörper (12') Nuten (14') ausgebildet sind, die zu der Ausnehmung hinweisen und in denen Spulen angeordnet sind, wobei Gruppen von Spulen ineinander benachbarten Nuten (14) einem Pol von zwei p Polen des Stators zugeordnet sind, zu dem eine Polteilung $\tau_p$ als ½ p-tel des die Ausnehmung begrenzenden Kreisbogens (18') definierbar ist, wobei die Nuten durch Zähne mit einer Zahnbreite $bz$ voneinander getrennt sind, so dass sich die Summe der Zahnbreiten in einen Pol jeweils zu $\Sigma bz$ ergibt, und der Nutgrund der Außenkontur (16') um eine Jochhöhe $hj$ beabstandet ist, **dadurch gekennzeichnet, dass** gilt:

$$0{,}7\ \tau_p < \sum bz$$

und

$$hj > 0{,}5\ \tau_p\ .$$

**2.** Stator (10') nach Anspruch 1, **dadurch gekennzeichnet, dass** die Spulen aus Material gebildet sind, das Kohlenstoffnanoröhren umfasst.

**3.** Stator (10') nach Anspruch 2, **dadurch gekennzeichnet, dass** das Spulenmaterial vollständig aus Kohlenstoffnanoröhren besteht.

**4.** Stator (10') nach Anspruch 2, **dadurch gekennzeichnet, dass** das Spulenmaterial ein Kompositmaterial aus Kohlenstoffnanoröhren und einem weiteren Material, vorzugsweise Kupfer, ist.

**Geänderte Patentansprüche gemäss Regel 137(2) EPÜ.**

**1.** Stator (10') für eine elektrische Maschine mit einem Grundkörper (12'), der eine Ausnehmung mit kreisförmigem Querschnitt aufweist, wobei in dem Grundkörper (12') Nuten (14') ausgebildet sind, die zu der Ausnehmung hinweisen und in denen Spulen angeordnet sind, wobei Gruppen von Spulen ineinander benachbarten Nuten (14) einem Pol von zwei p Polen des Stators zugeordnet sind, zu dem eine Polteilung $\tau_p$ als ½ p-tel des die Ausnehmung begrenzenden Kreisbogens (18') definierbar ist, wobei die Nuten durch Zähne mit einer Zahnbreite *bz* voneinander getrennt sind, so dass sich die Summe der Zahnbreiten in einen Pol jeweils zu Σ*bz* ergibt, und der Nutgrund der Außenkontur (16') um eine Jochhöhe *hj* beabstandet ist, **dadurch gekennzeichnet, dass** gilt:

$$0{,}7\ \tau_p < \sum bz$$

und

$$hj > 0{,}5\ \tau_p\ ,$$

und wobei die Spulen, welche in den Nuten angeordnet sind, aus einem Material gebildet sind, das Kohlenstoffnanoröhrchen umfasst .

**2.** Stator (10') nach Anspruch 1, **dadurch gekennzeichnet, dass** das Spulenmaterial vollständig aus Kohlenstoffnanoröhren besteht.

**3.** Stator (10') nach Anspruch 1, **dadurch gekennzeichnet, dass** das Spulenmaterial ein Kompositmaterial aus Kohlenstoffnanoröhren und einem weiteren Material, vorzugsweise Kupfer, ist.

## FIG 1
(Stand der Technik)

## FIG 2

| | Europäisches Patentamt European Patent Office Office européen des brevets | **EUROPÄISCHER RECHERCHENBERICHT** | **Nummer der Anmeldung** EP 08 00 9851 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 804 896 A (TAKEHARA ISAMU [JP] ET AL) 8. September 1998 (1998-09-08) | 1 | INV. H02K1/16 H02K3/02 |
| Y | * Spalte 1; Abbildung 2 * <br> * Spalte 2, Zeilen 43-67 * <br> * Spalte 3, Zeilen 1-15,48-54 * <br> * Spalte 4, Zeilen 14,35-38 * <br> ----- | 2-4 | |
| Y | JP 2008 104297 A (TAMAGAWA SEIKI CO LTD) 1. Mai 2008 (2008-05-01) <br> * Zusammenfassung; Abbildung 1 * <br> ----- | 2-4 | |
| A | US 2002/183207 A1 (HJORTSTAM OLOF [SE] ET AL) 5. Dezember 2002 (2002-12-05) <br> * Absätze [0001], [0037], [0039]; Abbildung 3 * <br> ----- | 2-4 | |
| D,A | EP 1 275 118 A (ABB AB [SE]) 15. Januar 2003 (2003-01-15) <br> * Absatz [0034]; Abbildungen 1-3 * <br> ----- | 2-4 | |
| | | | RECHERCHIERTE SACHGEBIETE (IPC) H02K |

Der vorliegende Recherchenbericht wurde für alle Patentansprüche erstellt

| Recherchenort | Abschlußdatum der Recherche | Prüfer |
|---|---|---|
| München | 28. November 2008 | Strasser, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 08 00 9851

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 5804896 | A | 08-09-1998 | JP | 2782044 B2 | 30-07-1998 |
| | | | JP | 8182281 A | 12-07-1996 |
| JP 2008104297 | A | 01-05-2008 | KEINE | | |
| US 2002183207 | A1 | 05-12-2002 | AU | 4497201 A | 15-10-2001 |
| | | | CN | 1381059 A | 20-11-2002 |
| | | | EP | 1206778 A1 | 22-05-2002 |
| | | | SE | 0003944 A | 01-10-2001 |
| | | | WO | 0175903 A1 | 11-10-2001 |
| EP 1275118 | A | 15-01-2003 | AT | 295608 T | 15-05-2005 |
| | | | AU | 4497001 A | 15-10-2001 |
| | | | CN | 1430785 A | 16-07-2003 |
| | | | DE | 60110777 D1 | 16-06-2005 |
| | | | SE | 0001123 A | 01-10-2001 |
| | | | WO | 0175902 A1 | 11-10-2001 |
| | | | US | 2004020681 A1 | 05-02-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1275118 B1

**In der Beschreibung aufgeführte Nicht-Patentliteratur**

- **Wikipedia.** Enzyklopädie in der Fassung. 19. Februar 2008